# EUROPÄISCHE PATENTSCHRIFT

(11) **EP 0 382 001 B1**
(45) Veröffentlichungstag und Bekanntmachung des Hinweises auf die Patenterteilung: **07.04.1993**
(21) Anmeldenummer: 90101418.3
(22) Anmeldetag: 24.01.1990
(51) Int. Cl.: A47J 31/40, A47J 31/10

(54) **Vorrichtung zum Zubereiten heisser Getränke**
Apparatus for making hot drinks
Appareil pour préparer des boissons chaudes

(30) Priorität: 09.02.1989 DE 3903815; 03.03.1989 DE 8902598 U
(43) Veröffentlichungstag der Anmeldung: 16.08.1990
(73) Patentinhaber: Timm, Eberhard, 21279 Appel (DE)
(72) Erfinder: Timm, Eberhard, 21279 Appel (DE)
(74) Vertreter: Glawe, Delfs, Moll & Partner

(56) Entgegenhaltungen:
- DE-A- 1 554 630
- DE-A- 2 244 716
- DE-A- 2 622 216
- DE-B- 1 166 949
- DE-C- 512 276
- FR-A- 1 483 269
- FR-A- 2 579 090
- US-A- 4 167 899
- US-A- 4 577 080

## Beschreibung

Die Erfindung betrifft eine Vorrichtung zum Zubereiten heißer Getränke mit einem Flüssigkeitsvorratsbehälter, einem darin angeordneten elektrischen Heizelement, einem Stromversorgungsteil und einem Sammelbehälter für das zubereitete Getränk.

Vorrichtungen dieser Art sind in Form von Kaffeemaschinen oder Teeautomaten (DE-B- 11 66 949) sehr weit verbreitet. Der Nachteil dieser Kaffeemaschinen und ähnlicher Vorrichtungen der eingangs genannten besteht darin, daß die Zubereitung der Getränke sehr kompliziert ist, da Wasser oder eine andere Flüssigkeit und ein Aufguß- oder Brühmittel separat und portioniert in die Vorrichtung eingegeben werden müssen. Diese Vorrichtungen haben weiter den Nachteil, daß sie viele Teile aufweisen, die gereinigt werden müssen. Schließlich sind diese Vorrichtungen für einen Gebrauch in Autos, Flugzeugen usw. nicht geeignet, da sie viel Platz einnehmen und die Flüssigkeit bei Bewegung des Fahrzeuges herausschwappen kann. Außerdem steht auf Reisen häufig keine Quelle für geeignete Flüssigkeiten, meistens Wasser zur Verfügung.

Die Aufgabe der Erfindung besteht in der Schaffung einer Vorrichtung der eingangs genannten Art, die auch auf Reisen sehr einfach und zweckmäßig verwendet werden kann.

Die erfindungsgemäße Lösung besteht darin, daß der Flüssigkeitsvorratsbehälter als vom als Halterung für den Behälterteil ausgebildeten Stromversorgungsteil getrennte, durch ein sich bei einem vorgegebenen Behälterinnendruck irreversibel öffnendes ventil verschlossene Einheit ausgebildet ist, mit Kontakten für die Zuleitung von elektrischem Strom versehen ist, die über eine elektrische Leitung mit dem Heizelement verbunden sind, und in den Sammelbehälter so einsetzbar oder eingesetzt ist, daß sich in der Betriebsstellung der Sammelraum im wesentlichen unterhalb des Vorratsbehälters befindet, und daß die Stromzufuhr zum Heizelement so ausgebildet ist, daß sie beim Öffnen des Ventils unterbrochen wird.

Die Vorrichtung weist also einen Flüssigkeitsvorratsbehälter auf, der verschlossen ist. Auf diese Weise hat man in Form des Flüssigkeitsvorratsbehälters gleichzeitig portionierte Mengen der Flüssigkeit zur Verfügung, wenn man mehrere solche Flüssigkeitsvorratsbehälter mit sich führt. Die Flüssigkeit kann dabei Wasser oder zum Beispiel Milch oder eine andere Flüssigkeit sein. Die Flüssigkeit kann auch in gefrorener Form vorliegen, insbesondere dann, wenn sie nicht gut haltbar ist, wie zum Beispiel Milch. Der Flüssigkeitsvorratsbehälter ist dabei nicht fest mit einer Stromversorgung versehen, sondern weist Kontakte für die Zuleitung von elektrischem Strom auf. Zum Erwärmen der Flüssigkeit kann der Vorratsbehälter dann an eine Stromversorgung angeschlossen werden, zum Beispiel in eine entsprechende Versorgungseinheit eingeschoben werden, die mit entsprechenden elektrischen Kontakten verbunden ist und an eine Energiequelle angeschlossen ist, zum Beispiel die 6-Volt-, 12-Volt- oder 24-Volt-Batterie eines Fahrzeugs.

Der Flüssigkeitsvorratsbehälter ist zunächst durch das Ventil geschlossen. Wird der Flüssigkeitsvorratsbehälter an die elektrische Energieversorgung angeschlossen und erwärmt sich dadurch die Flüssigkeit, so erhöht sich der Innendruck, da die Flüssigkeit und ein eventuell eingeschlossenes Gasvolumen erwärmt wird und im Wasser gelöste Gase wie zum Beispiel Sauerstoff und Kohlendioxid in Form von Blasen aus der Flüssigkeit heraustreten und dadurch ebenfalls den Druck erhöhen. Bei einem vorgegebenen Innendruck, wenn die Flüssigkeit also erfahrungsgemäß die nötige Temperatur erreicht hat, öffnet sich das Ventil irreversibel, und es strömt Flüssigkeit heraus. Da der Öffnungsvorgang irreversibel ist, schießt sich das Ventil hinterher nicht wieder, so daß die gesamte Flüssigkeit durch das Ventil herausläuft, auch nachdem der Innendruck durch das Öffnen des Ventils wieder den normalen Wert angenommen hat.

Gleichzeitig wird mit dem Öffnen des Ventils die Stromverbindung zum Heizelement dauerhaft unterbrochen, so daß hier der Behälter nicht dadurch beschädigt werden kann, daß er auch im leeren Zustand weiter beheizt wird.

In der Betriebsstellung unterhalb des Flüssigkeitsbehälters befindet sich der Sammelbehälter, in den die Flüssigkeit einströmt. Aus diesem Sammelbehälter kann die Flüssigkeit dann entnommen, zum Beispiel getrunken werden.

Im Sammelbehälter könnten zum Beispiel die Trockenmaterialien einer aufzubrühenden Suppe angeordnet sein.

In vielen Fällen möchte man aber einen Brüh- oder Aufgußvorgang einleiten, indem das Brüh- oder Aufgußmittel nicht in den Sammelbehälter gelangt, etwa bei Kaffee oder Tee. In diesem Falle wird zweckmäßigerweise vorgesehen, daß in der Betriebsstellung unterhalb des Ventils ein durch ein Sieb oder Filter verschlossener Vorratsraum für ein Brüh- oder Aufgußmaterial vorgesehen ist. Zweckmäßigerweise ist dabei das Brüh- oder Aufgußmaterial im unteren Bereich des Vorratsraums fixiert, was zum Beispiel dadurch erreicht werden kann, daß das Brüh-oder Aufgußmaterial nicht nur unten durch den Filter oder das Sieb, sondern auch durch eine darüber angeordnete entsprechende Filterplatte oder dergleichen eingeschlossen ist.

Es kann aber auch vorgesehen werden, daß das Brüh- oder Aufgußmaterial in einem unter Wärmeeinwirkung zerstörbaren Folienbeutel angeordnet ist, der sich ebenfalls in dem Vorratsraum befindet. Dieser Folienbeutel platzt dann unter der Wirkung der heißen Flüssigkeit auf, wobei durch den Filter oder Sieb verhindert wird, daß er in den Sammelbehälter gelangen kann. Solche folienförmigen Beutel sind insbesondere für flüssige Brüh- oder Aufgußmaterialien zweckmäßig, zum Beispiel bei der Herstellung von Grog, Glühwein oder dergleichen.

Eine besonders raumsparende Ausführungsform zeichnet sich dadurch aus, daß der Sammelbehälter den Vorratsbehälter in der Betriebsstellung seitlich und unten vollständig umschließt, wobei Sammelbehälter und Vorratsbehälter auch bereits fest miteinander verbunden sein können.

Bei dieser Ausführungsform ist zweckmäßigerweise vorgesehen, daß der Sammelbehälter mit einem seitlichen rohrförmigen Kanal zum Entnehmen des Getränkes versehen ist. Durch diesen seitlichen Kanal kann das Getränk dann zum Beispiel direkt getrunken werden, oder es kann an der Mündung des Kanals eine Trinkhilfe eingeführt werden, wie zum Beispiel ein Strohhalm oder ein Schnuller. Dabei können entweder an der Trinkhilfe oder in der Mündung des Entnahmekanals Dichtungen vorgesehen sein, damit keine Flüssigkeit zwischen Trinkhilfe und Mündung herauslaufen kann.

Werden die aus Vorratsbehälter und Sammelbehälter sowie Heizung usw. bestehenden Teile als eine kompakte Behältereinheit geliefert, so ist zweckmäßigerweise die Öffnung des Entnahmekanals mit einer abziehbaren Folie verschlossen. In diesem Falle ist nicht nur die Flüssigkeit, sondern auch das Brüh- oder Aufgußmaterial vor Erwärmung der Flüssigkeit bzw. vor dem Genuß des erwärmten Getränks hermetisch abgeschlossen. Insbesondere kann auch der Sammelbehälter auf diese Weise nicht verschmutzen.

Insbesondere bei der bereits erwähnten Behältereinheit ist es zweckmäßig, wenn diese mit einem in der Betriebsstellung oben seitlich herausragenden Flansch zum Einschieben in eine Stromversorgungseinheit und zum Festhalten in derselben versehen ist.

Zweckmäßigerweise ist die Behältereinheit mit oberen Kontakten versehen, wobei es für viele Anwendungen aber zweckmäßiger ist, wenn die Behältereinheit mit seitlichen Kontakten versehen ist.

Die Halterung und Stromversorgungseinheit kann insbesondere klappbar ausgebildet sein, damit sie bei Nichtbenutzung raumsparend weggeklappt werden kann. Außerdem kann sie mit einer Lichtquelle versehen sein, um zum Beispiel das Einfügen der Behältereinheit zu erleichtern. Die Halterung kann aber auch fest angeordnet sein, zum Beispiel in Automaten. Sie kann auch so ausgebildet sein, daß sie zum Beispiel in eine entsprechende Ausnehmung einer Wand eingeschoben werden kann oder sonstwie versenkt werden kann.

Als besonders zweckmäßig hat es sich erwiesen, wenn das Ventil ein zylinderförmiges Element aufweist, das von einer ringförmigen Dichtung des Bodens des Vorratsbehälters umgriffen wird und in der Betriebsstellung unten einen Bereich kleineren Durchmessers aufweist, wobei der Vorratsbehälter so ausgebildet ist, daß sich sein Boden bei anwachsendem Druck nach unten bewegt. Dieses Ventil arbeitet so, daß der Vorratsbehälter bei offenem Ventil auf den Kopf gestellt wird und die Flüssigkeit eingefüllt wird. Dann wird der gewölbte Boden gegen seine Vorspannung nach innen gedrückt; in dieser Stellung schnappt er ein, wobei dann die Dichtung mit dem Bereich größeren Durchmessers des Zylinders in Berührung kommt und hier hermetisch abdichtet. Erhöht sich der Innendruck wegen Erwärmung, wird der Boden allmählich wieder herausgedrückt. Bei einer gewissen Stellung wird er sich dann aufgrund seiner Vorspannung schlagartig ganz nach unten auswölben, wobei die Anordnung dann so getroffen ist, daß die Dichtung in den Bereich kleineren Durchmessers des zylinderförmigen Elementes gelangt. An dieser Stelle vermag sie nicht mehr abzudichten, so daß die Flüssigkeit in gewünschter Weise durch das Ventil ausströmen kann.

Bei einer anderen Ausführungsform ist der Boden zwar starr, die Seitenwand des Vorratsbehälters ist aber mit einem ringförmigen, balgenartigen Bereich versehen, der ebenfalls auf eine Stellung hin vorgespannt ist, bei der der Boden verhältnismäßig weit nach unten gedrückt ist. Beim Befüllen des Vorratsbehälters wird dies mit Unterdruck bewirkt, so daß der geschlossene Behälter aufgrund des Unterdrucks eine Stellung beibehält, in der der Boden eine obere Stellung einnimmt. Wird die Flüssigkeit erwärmt, so ist der Boden bestrebt, sich nach unten zu bewegen, wodurch er aber durch die Reibung bei dem genannten Ventil gehindert wird. Erst bei genügend großem Druck und damit genügend großer Temperatur bewegt sich der Boden dann nach unten, wobei bei dann offenem Ventil der nunmehr entspannte Balgen den Boden nach unten drückt, so daß das Ventil in der geöffneten Stellung bleibt.

Zweckmäßigerweise ist vorgesehen, daß die Stromzuleitung von den Kontakten zum Heizelement nach außen vorgespannte Federelemente aufweist, die bei sich nach unten bewegendem Boden in eine Stellung freigebbar sind, in der die Verbindung unterbrochen ist.

Die Kontakte des Behälters können aber auch so ausgebildet und angeordnet sein, daß die Stromverbindung zwischen den Kontaktelementen der Halterung und den Kontakten unterbrochen wird, die am Behälter angeordnet sind. Die Kontakte können dafür in balgenartigen Ausnehmungen des Behälters angeordnet sein und sich bei Nachlassen eines anfänglichen Überdrucks nach innen bewegen. Dies wird dadurch erreicht, daß der Balgen der Ausnehmung zwar bestrebt ist, die Kontakte nach innen zu drücken, was aber zunächst durch den Innendruck des Behälters verhindert wird, der mit Überdruck gefüllt ist. Ist durch den Heizvorgang dann der Überdruck weiter erhöht, so daß sich das Ventil öffnet und der Überdruck beseitigt wird, so bewegen sich die Kontakte aufgrund der Bewegung der balgenartigen Wände nach innen, so daß kein elektrischer Kontakt mehr zur Stromversorgung vorhanden ist.

Zweckmäßigerweise sind die Ausnehmungen für die Kontakte am Deckel angeordnet und wirken mit federbelasteten Kontaktelementen des Stromversorgungsteils zusammen, die mit einem mechanischen Anschlag für die Begrenzung ihrer Bewegung in Richtung zum Behälterinnern versehen sind, damit diese beweglichen Kontaktelemente den Behälterkontakten nur eine gewisse Strecke folgen können, so daß hier sicher der Kontakt unterbrochen wird.

Die Kontaktelemente können an einem Hebel gelagert sein, der einen beweglichen Anschlag für den Behälterrand aufweist. In diesem Falle werden die zunächst zurückgezogenen Kontaktelemente durch Einschieben des Behälters über Hebelwirkung in die Ausnehmungen hinein mit den Kontakten in Berührung gebracht. Wird der Behälter anschließend wieder herausgezogen, so bewegen sich die Kontaktelemente des Stromversorgungsteils wieder nach oben, so daß das Herausziehen des Behälters nicht verhindert wird. Besonders bei dieser Ausführungsform ist es zweckmäßig, wenn die Halterung eine federnd nachgebende Rasteinrichtung für den Behälter aufweist, damit der Behälter nicht durch die Federkraft des beweglichen Anschlags aus dem Stromversorgungsteil herausgeschoben wird.

Die Kontakte selber können zum Beispiel dichtende Nieten sein, die durch die Behälterwandung hindurchgehen. Besonders zweckmäßig hat es sich aber erwiesen, die Kontakte aus Metallplättchen herzustellen, die im Mittelbereich topfförmig deformiert werden, wobei ein Randbereich bestehen bleibt, der an der Behälterwand dichtend anliegt, wobei nur die Stirnfläche des topfförmigen Bereiches durch die Behälterwand hindurchgeht, um mit dort befindlichen Kontakten der Stromversorgung Kontakt zu machen.

Selbstverständlich muß der Vorratsbehälter genügend stabil sein, daß sich nur sein Boden wesentlich deformiert. Normalerweise wird er eine zylinderförmige Seitenwand haben, die große Drucke aushalten kann. Der Deckel wird mehr oder weniger flach sein. Hier kann aber eine entsprechende Stützfläche in der Stromversorgungseinheit vorgesehen sein, gegen die die Deckelfläche des Behälters sich abstützen kann, wenn sich der Innendruck erhöht.

Bei einer vorteilhaften Ausführungsform ist zwischen Flüssigkeitsvorratsbehälter und Sammelbehälter eine wenigstens zum Teil lösbare Verbindung vorgesehen, z.B. eine Trennlinie mit einem Abrißstreifen. Nach Bereitung des Getränks oder der Suppe kann dieser Streifen abgerissen werden, so daß der Vorratsbehälter weggeklappt werden kann, so daß die Suppe oder das Getränk besser zu genießen ist. Anschließend kann dann der Vorratsbehälter wieder auf den Behälter geklappt werden, damit keine durch Speise- oder Flüssigkeitsreste verunreinigten Flächen freiliegen. Der Vorratsbehälter könnte aber auch so mit dem Sammelbehälter verbunden sein, daß er vollständig vom Sammelbehälter getrennt werden kann.

Die Erfindung wird im folgenden anhand von vorteilhaften Ausführungsformen unter Bezugnahme auf die beigefügten Zeichnungen beschrieben. Es zeigen:
- Fig. 1: in einem Vertikalschnitt einen Ausführungsform der Erfindung;
- Fig. 2: in Detailansicht die Behältereinheit der Fig. 1, die in einen Halter mit Stromversorgung eingeschoben ist;

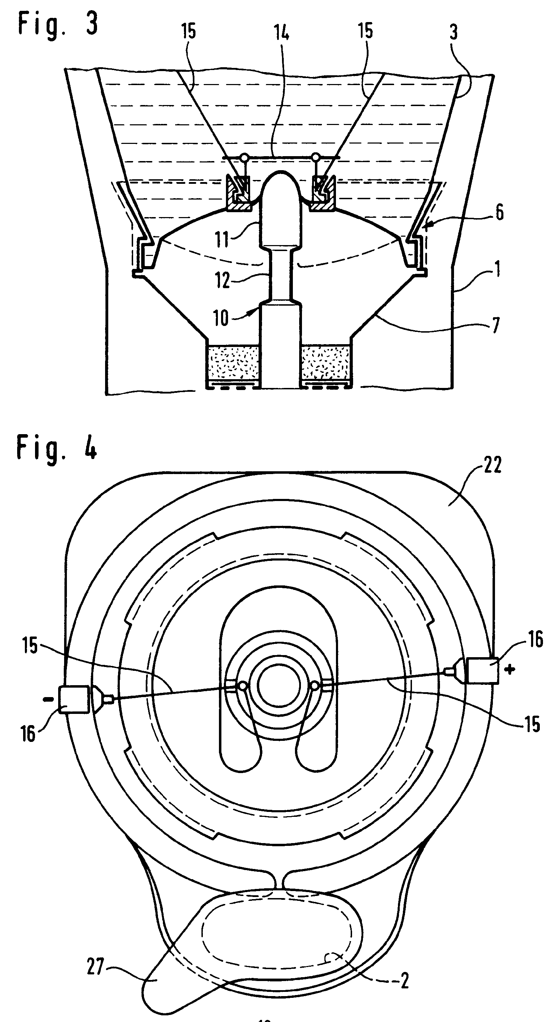

- Fig. 3: eine Detailansicht des Behälters der Fig. 2 in einer gegenüber der Fig. 1 um 90° gedrehten Stellung;
- Fig. 4: in Draufsicht den teilweise geöffneten Behälter;
- Fig. 5: die Öffnungsbewegung des Ventils in zwei verschiedenen Bewegungsphasen;
- Fig. 6: eine Ausbildung des Kontaktes der Behältereinheit;
- Fig. 7: eine andere Ausbildung des Kontaktes;
- Fig. 8: eine im Zusammenhang mit dem Behälter zu verwendende Trinkhilfe;
- Fig. 9 bis 12: eine besonders vorteilhafte Form eines Kontakts in einer Ansicht ähnlich derjenigen der Fig. 1, in einem Horizontalschnitt, in Draufsicht von innen und in einem horizontalen Schnitt;
- Fig. 13: eine andere Ausführungsform des Vorratsbehälters und des Kontaktes;
- Fig. 14 und 15: in einem Schnitt eine andere Ausführungsform des Behälters;
- Fig. 16: einen Schnitt durch den Stromversorgungsteil mit beweglichen Kontaktelementen;
- Fig. 17: eine Detaildarstellung des Kontaktelementes der Fig. 16 in einer anderen Stellung; und
- Fig. 18 und 19: eine weitere Ausführungsform der Erfindung in zwei verschiedenen Stellungen.

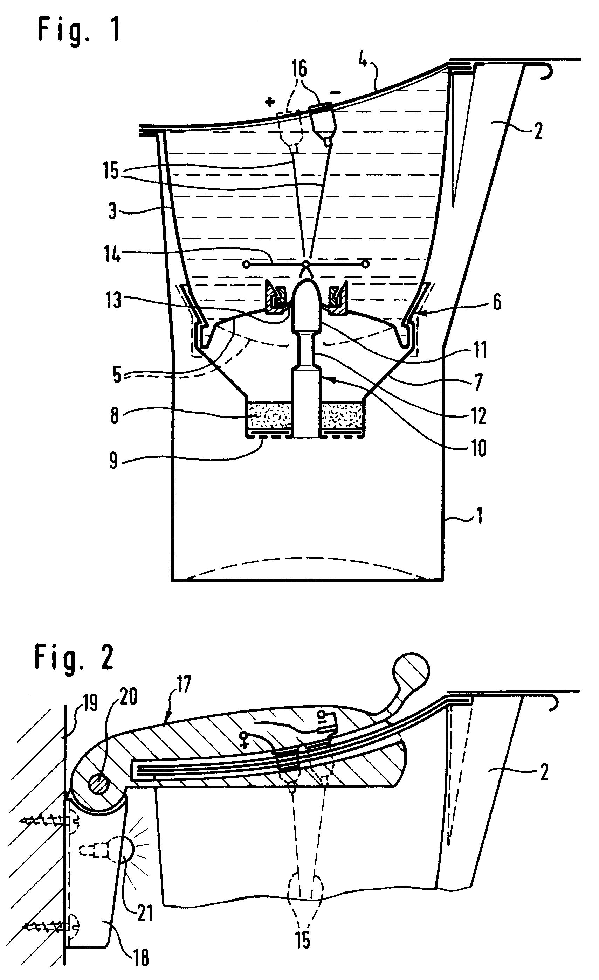

Wie dies in Fig. 1 gezeigt ist, befindet sich in einem Sammelbehälter 1, der mit einem seitlichen Auslaßkanal 2 versehen ist, ein Vorratsbehälter 3, der mit einer Flüssigkeit gefüllt ist. Die Behälter haben im wesentlichen zylindrische Form und sind durch einen Deckel 4 abgeschlossen. Der Boden 5 des Vorratsbehälters 3 ist gewölbt und so vorgespannt, daß er die in Fig. 1 gestrichelt gezeichnete konvexe Form einnimmt. Mit Hilfe einer Schnapp-Rast-Verbindung 6 ist auf den Vorratsbehälters 3 ein weiterer Behälter 7 aufgesetzt, der in einem unteren ringförmigen Bereich das Brüh- oder Aufgußmaterial 8 enthält. Der Behälter 7 weist dabei im Bereich des Materials 8 unten ein Sieb oder einen Filter 9 auf. Nach oben hin kann das Material 8 ebenfalls durch ein Sieb oder einen Filter fixiert sein.

Der Behälter 7 weist mittig und axial einen zylinderförmigen Dorn 10 auf, der im oberen Bereich (bei 11) eine wesentlich größere Dicke hat als in einem mittleren Bereich 12. Gegen den dickeren Bereich 11 des Dorns 10 ist der Behälterboden 5 mit Hilfe einer Lippendichtung 13 abgedichtet. Oberhalb des Behälterbodens befindet sich ein elektrisches Heizelement 14 in Form eines Heizdrahtes, das über Kontaktfedern 15 mit Kontakten 16 verbunden ist.

Wie dies in Fig. 2 gezeigt ist, kann der Behälter in ein Stromversorgungsteil 17 eingeschoben werden, das mit einem Befestigungsteil 18 an einer Wand 19 befestigt ist, wobei das Stromversorgungsteil 17, das an eine Batterie oder ein sonstiges Stromnetz angeschlossen sein kann, um eine Achse 20 schwenkbar ist und eine Beleuchtungseinrichtung 21 aufweist.

Die Befüllung des Behälters geschieht auf folgende Weise. Der Boden 5 hat zunächst die gestrichelt gezeigte Form, so daß die Lippendichtung 14 nicht gegen den dünneren Bereich 12 des Dorns 10 abdichtet. In dieser Stellung wird der Behälter auf den Kopf gestellt und befüllt. Anschließend wird der Boden 5 nach innen in die in der Fig. mit ausgezogenen Linien gezeigte Stellung gedrückt, in der er verbleibt. In diesem Fall wird durch die Lippendichtung 14, die nun am dickeren Dornteil 11 anliegt, der Behälter verschlossen. Anschließend wird der untere Behälter 7 mit den Brüh- oder Aufgußmaterialien auf den Behälter 3 aufgesetzt. Statt der gezeigten festen Brühmaterialien 8 kann im Raum des Behälters 7 auch ein Folienbeutel mit zum Beispiel flüssigen Brühstoffen eingeschlossen werden. Anschließend wird dann der Behälter 3 im Sammelbehälter 1 eingesetzt und dort dauerhaft befestigt, falls man es nicht vorzieht, den Vorratsbehälter 3 mit Flüssigkeit und Brühstoff getrennt vom Behälter 1 zu liefern und aufzubewahren, was den Vorteil hätte, daß man nur einen oder einige wenige Behälter 1 immer wieder verwenden könnte.

Wie dies in Fig. 4 gezeigt ist, ist der Behälter 1 an seinem oberen Rand mit einem Flansch 22 versehen, mit dem er in den Stromversorgungsteil 17 eingeschoben und dort festgehalten werden kann. Bei der Ausführungsform der Fig. 1 und 2 ist der Deckel 4 gekrümmt, was ein Herausfallen des Behälters aus dem Stromversorgungsteil 17 verhindert. Der Deckel könnte aber auch eben ausgestaltet sein, was insbesondere für automatische Geräte zweckmäßig wäre.

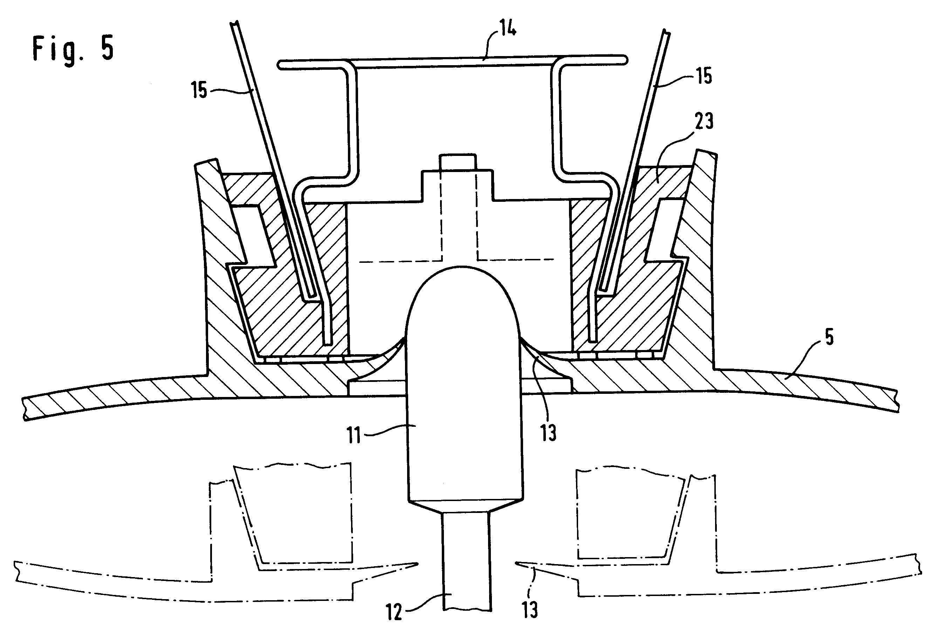

In Fig. 5 ist oben der Zustand gezeigt, bei dem das Ventil geschlossen ist, wenn sich der Boden 5 in der oberen Stellung befindet. In diesem Falle sind die Zuleitungen 15 im elektrischen Kontakt mit dem Heizelement 14. Zu diesem Zweck sind entsprechende Schlitze in einem durch eine Schnappverbindung eingebrachten Element 23 vorgesehen. Die Zuleitungen 15 sind dabei als Federn ausgebildet, die nach außen belastet sind. Die Dichtung 13 schließt bei der oberen Stellung dicht gegen den verdickten Zylinderteil 11 ab. Erhöht sich der Druck, so wird der Boden nach Überwinden der neutralen Stellung aufgrund der Vorspannung nach unten klappen, so daß einerseits die Dichtungslippen 13 nicht mehr gegen den zentralen Dorn anliegen, da sie sich nunmehr im dünneren Bereich 12 befinden. Andererseits werden aber die Kontaktfedern 15 nicht mehr durch den Körper 23 an einer nach außen gerichteten Bewegung gehindert, so daß sie nach außen wegfedern, wodurch der Kontakt zum Heizelement 14 unterbunden ist. Die Flüssigkeit kann nunmehr durch das Ventil auslaufen, wobei seitlich am Element 23 vorbei auch ein Luftaustausch stattfinden kann, so daß nicht etwa Flüssigkeit durch einen Unterdruck im Vorratsbehälter zurückgehalten wird.

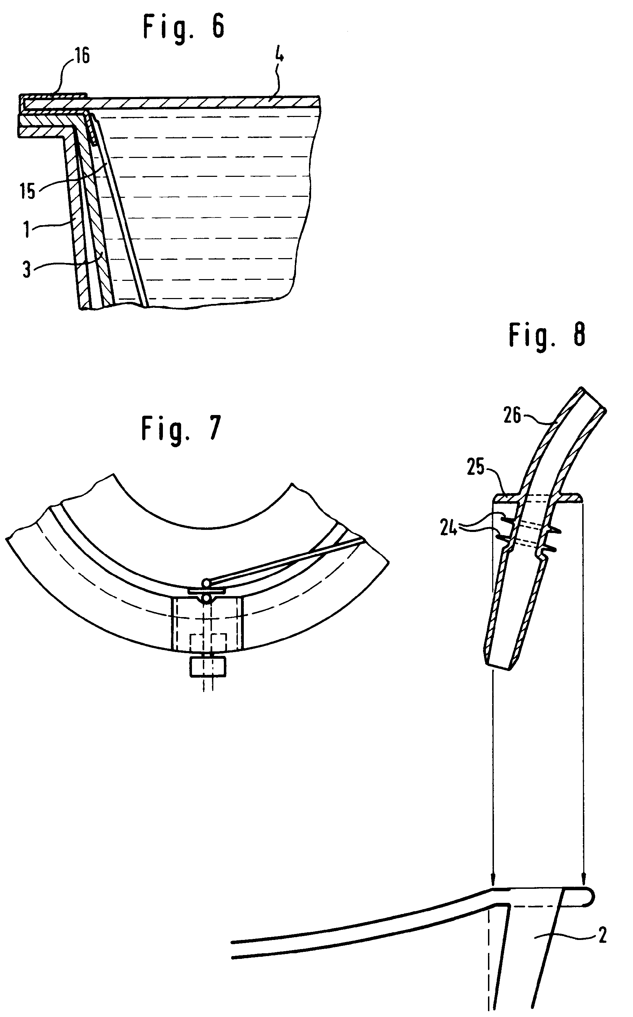

In Fig. 6 und 7 sind andere Arten der Kontakte gezeigt, mit denen die Behältereinheit mit Strom versorgt werden soll. Da sich die Zuleitungen 15 in der Flüssigkeit befinden und einen größeren Querschnitt als das Heizelement haben, wird nur sehr wenig Wärme zu den Kontakten 16 und damit zur Behälterwand geleitet.

In Fig. 8 ist dargestellt, daß in die Öffnung des Entnahmekanals 2 eine Trinkhilfe in Form eines Trinkhalms eingeführt werden kann, die Lippendichtungen 24 und einem Deckelelement 25 versehen ist, damit die Trinkhilfe 26 dichtend gegen die Öffnung des Entnahmekanals 2 anliegt. Diese Öffnung ist vor dem Gebrauch des Behälters mit einer Folie 27 verschlossen, die in Fig. 4 angedeutet ist.

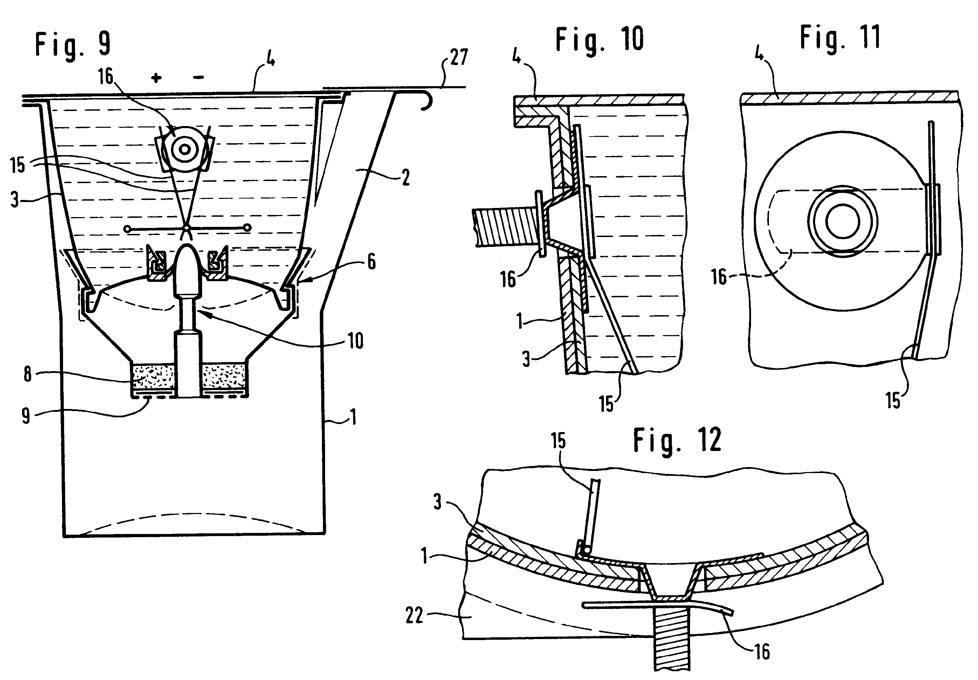

In den Fig. 9 bis 12 ist ein Kontakt 16 gezeigt, der aus einem Plättchen durch Prägung hergestellt ist und einen mittleren tassenförmigen Bereich aufweist, mit dem der Kontakt hergestellt wird, während ein Randbereich innen am Behälter anschließt. Die Abbildungen zeigen die Anordnung im Querschnitt, im Längsschnitt, in einer Ansicht von Innen und in einem Horizontalschnitt.

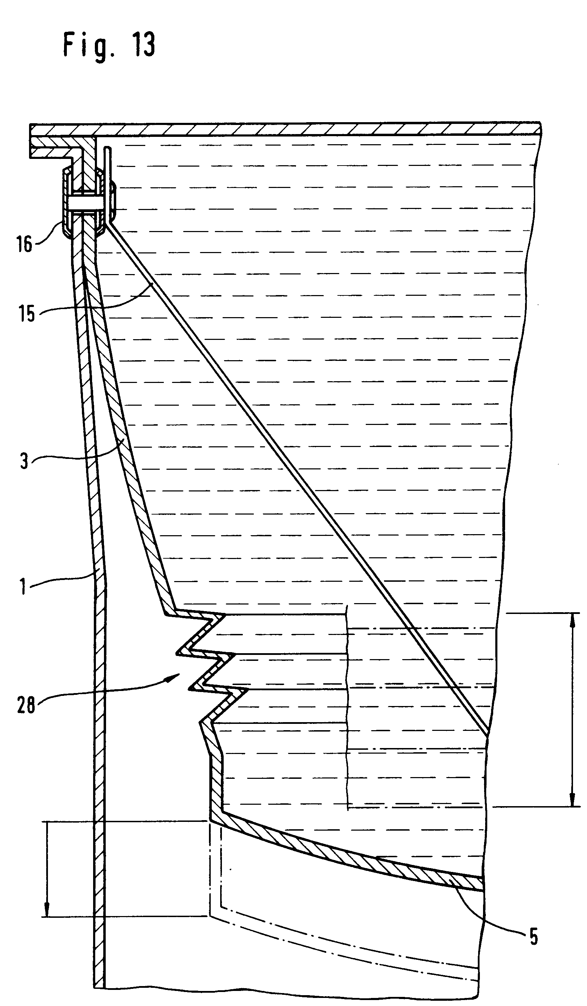

Fig. 13 zeigt eine Detailansicht einer Ausführungsform, bei der der Boden 5 anders als bei den bisher genannten Ausführungsformen starr ist. Es ist aber seitlich an der Wandung des Vorratsbehälters 3 ein ringförmiger balgenartiger Bereich 28 vorgesehen, der so vorgespannt ist, daß er den Boden 5 nach unten in die gestrichelte Stellung zu drücken bestrebt ist. Der Behälter wird mit Unterdruck gefüllt, so daß der balgenartige Bereich 28 zusammengedrückt wird. Bei Erwärmung wird der Boden dann nach unten gedrückt, wobei der balgenartige Bereich 28 nachgibt. Nach Überwinden der Reibung am Ventil 10 - 13 springt der Boden bzw. das Ventil aufgrund der Vorspannung dann dauernd in die geöffnete Stellung.

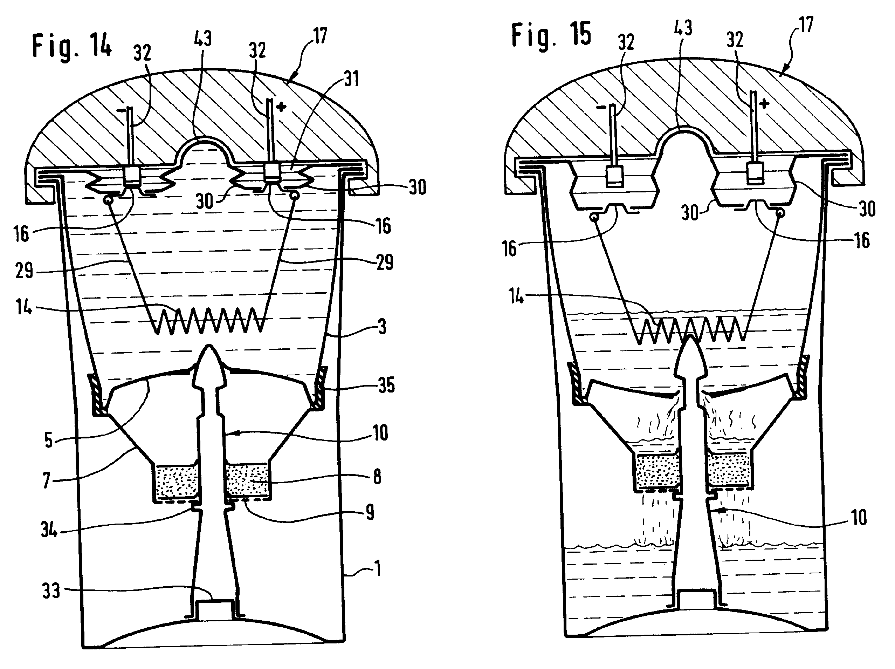

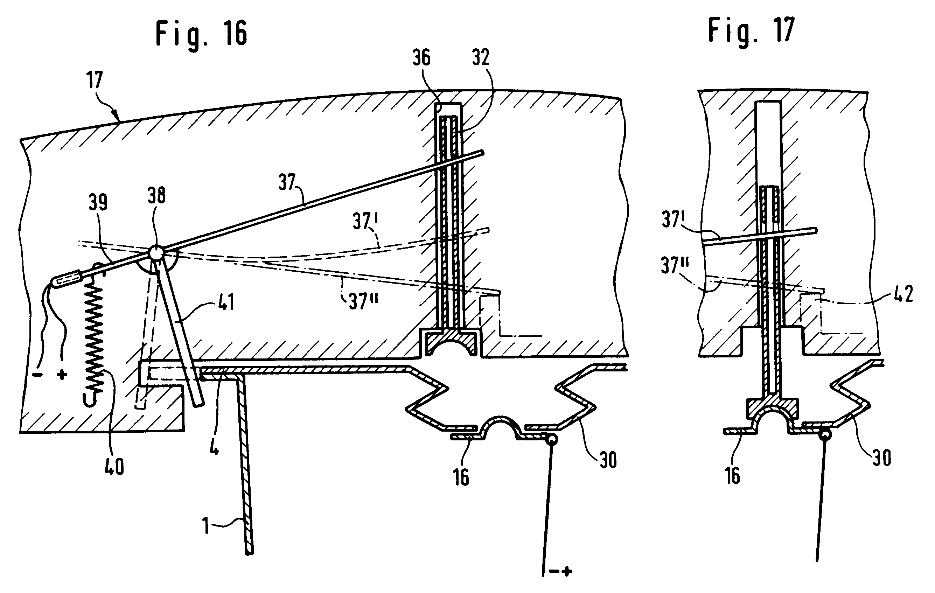

In Fig. 14 und 15 ist eine andere Ausführungsform des Behälters gezeigt. Dort sind die Kontakte 16 über feste Leitungen 29 mit dem Heizelement 14 verbunden, wobei das Kontaktelement ausschließlich durch die Leitungen 29 festgehalten werden kann, so daß es frei im Behälter 3 schweben kann. Besondere Halteelemente sind für das Heizelement 14 nicht nötig, was die Herstellung kostengünstiger macht. Der Behälter ist mit Überdruck befüllt, so daß balgenartige Seitenwände 30 von Ausnehmungen 31, an deren Boden die Kontakte 16 angeordnet sind, zusammengedrückt sind. In dieser Stellung berühren die Kontakte 16 Kontaktelemente 32 des Stromversorgungsteils 17, so daß der Behälterinhalt erwärmt werden kann.

Hat sich, wie dies in Fig. 15 gezeigt ist, das Ventil 10-13 geöffnet, so herrscht im Behälter 3 kein Überdruck mehr und die balgenartigen Wände 30 bewegen sich nach unten, wodurch der Kontakt zwischen den Kontaktelementen 32 des Stromversorgungsteils 17 und den Kontakten 16 des Behälters unterbrochen ist.

Bei dieser Ausführungsform reicht der Dorn 10 bis zum Boden des äußeren Behälters 1 und wird dort von einem Vorsprung 33 festgelegt. In ungefähr halber Höhe weist er einen Kragen 34 auf, durch den der weitere Behälter 7 nach oben gedrückt wird, so daß er sich vom Flüssigkeitsvorratsbehälter 3 nicht lösen kann. Zwischen Behälterwandung 3 und Wandung des Behälters 7 ist ein einfaches Dichtmittel 35 angeordnet. Es ist hier keine so aufwendige Schnapp-Rastverbindung oder ähnliche Verbindung wie bei der Ausführungsform der Fig. 1 erforderlich.

Die Kontaktelemente 32 des Stromversorgungsteils 17 sind stempelförmig ausgebildet und gleitend in entsprechenden Bohrungen 36 aufgenommen, wie dies in Fig. 16 und 17 gezeigt ist. Durch die Kontaktelemente 32 greift ein federnder Arm 37 hindurch, der bei 38 schwenkbar gelagert ist. Der Hebel 37 ist dabei bei 39 über den Schwenkpunkt 38 hinaus verlängert. An diesem Hebelarm 39 greift eine Zugfeder 40 an, die den Hebel 37 im Gegenuhrzeigersinn vorspannt, so daß das Kontaktelement 32 normalerweise in den Halter 17 zurückgezogen ist, so daß der Behälter ohne Behinderungen in den Stromversorgungsteil 17 eingeschoben werden kann.

An den Hebeln 37, 39 ist noch ein beweglicher Anschlag 41 befestigt, der bei Einschieben des Behälters 1 in Fig. 16 im Uhrzeigersinn verschwenkt wird, so daß der federbelastete Hebel 37 das Kontaktelement 32 nach unten drückt, bis der Hebel 37 die Stellung einnimmt, die bei 37′ in Fig. 16 und 17 angedeutet ist. In dieser Stellung drückt der Hebel 37 das Kontaktelement 32 gegen den Kontakt 16 und stellt so die elektrische Verbindung her. Bewegt sich der balgenartige Bereich 30 nach unten, so dreht sich der Arm 37 weiter im Uhrzeigersinn, bis er die Stellung 37˝ einnimmt, in der er einen Anschlag 42 berührt. Von diesem Moment an vermag das Kontaktelement 32 den Kontakt 16 nicht weiter zu folgen, so daß die elektrische Verbindung dauerhaft unterbrochen ist. Wird der Becher 1 anschließend herausgezogen, so wird die auf den Hebel 41 wirkende Kraft beendet, so daß sich der Kontakt 32 wieder in die Stellung der Fig. 16 zurückbewegt und der Becher aus dem Stromversorgungsteil 17 entnommen werden kann.

Damit der Becher 1 durch den federbelasteten Hebel 41 nicht aus dem Stromversorgungsteil 17 herausgeschoben werden kann, ist eine federbelastete, in den Fig. nicht gezeigte Rasteinrichtung zum Festhalten des Bechers in der eingeschobenen Stellung vorgesehen, die z.B. an einem leistenartigen Führungsvorsprung 43 angreifen kann, der in den Fig. 14 und 15 gezeigt ist.

Statt an balgenartigen Ausnehmungen könnten die Kontakte 16 auch an balgenartigen Vorsprüngen befestigt sein, die zunächst durch den Überdruck nach außen gedrückt sind, aber so vorgespannt sind, daß sich die Kontakte bei Nachlassen des anfänglichen Überdruckes wenigstens teilweise in Richtung auf den Behälterdeckel 4 zubewegen. In diesem Falle könnten die Kontaktelemente 32 des Stromversorgungsteiles 17 einfacher ausgebildet werden.

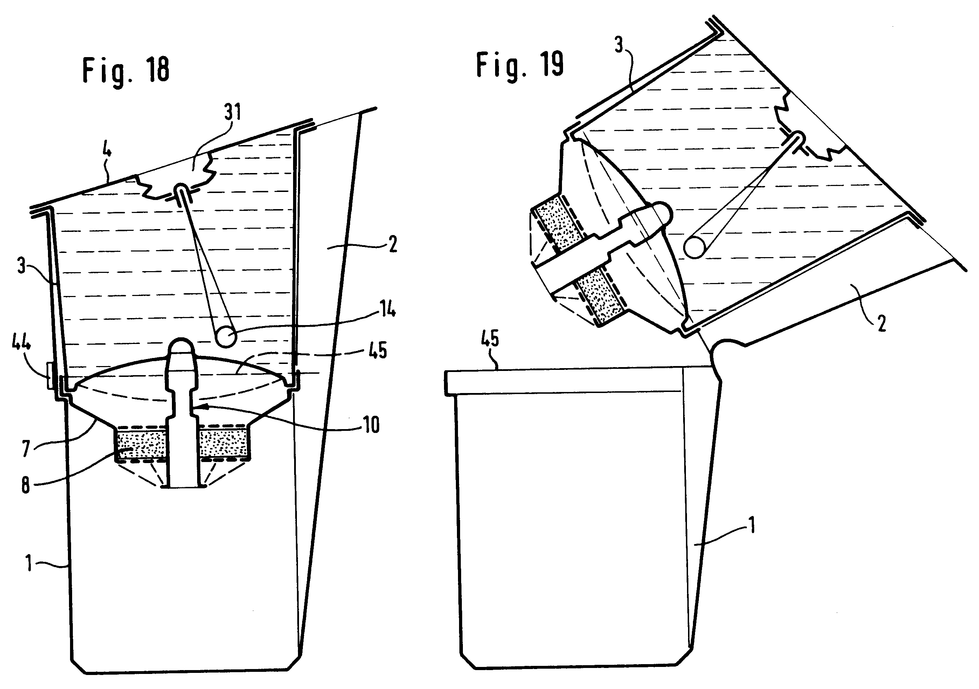

In den Fig. 18 und 19 ist eine weitere Ausführungsform der Vorrichtung der Erfindung gezeigt, wobei die Vorrichtung von der Seite in der zu der Ansicht der Fig. 14 und 15 senkrechten Richtung gezeigt ist. Ein Unterschied besteht gegenüber der Ausführungsform der Fig. 14 und 15 darin, daß der Deckel 4 des Vorratsbehälters 3 nicht waagerecht, sondern schräg angeordnet ist, was einerseits den Vorteil hat, daß sich im obersten Teil eine Luftblase sammeln kann. Andererseits wird dadurch das Trinken erleichtert, und der Behälter sitzt während des Heizvorganges sicherer in der Halterung. Weiter ist der Dorn 10 nicht am Boden des Sammelbehälters befestigt, sondern am Behälter 7, der auch das Brüh- oder Aufgußmaterial 8 trägt. Dies hat den Vorteil, daß der Dorn 10 aus dem aufgebrühten Material herausbewegt wird, wenn die Vorrichtung aufgeklappt wird, wie dies in Fig. 19 gezeigt ist. Zu diesem Zweck weist die Vorrichtung eine waagerechte Trennlinie 45 auf, die mit einem Abreißband 44 verschlossen ist. Nach Entfernen des Abreißbandes 44 kann der Behälter wie in Fig. 19 aufgeklappt werden. Falls gewünscht kann die Trennungslinie 45 nicht in einem Restbereich unterbrochen sein, so daß die Behälterteile wie in Fig. 19 gezeigt zusammenhängend bleiben. Die Trennungslinie 45 könnte auch durchgehend sein, so daß die beiden Teile voneinander getrennt werden können.

## Patentansprüche

1. Vorrichtung zum Zubereiten heißer Getränke mit einem Flüssigkeitsvorratsbehälter, einem darin angeordneten elektrischen Heizelement, einem Stromversorgungsteil und einem Sammelbehälter für das zubereitete Getränk, dadurch gekennzeichnet, daß der Flüssigkeitsvorratsbehälter (3) als vom als Halterung für den Behälterteil ausgebildeten Stromversorgungsteil (17) getrennte, durch ein sich bei einem vorgegebenen Behälterinnendruck irreversibel öffnendes Ventil (10 - 13) verschlossene Einheit ausgebildet ist, mit Kontakten (16) für die Zuleitung von elektrischem Strom versehen ist, die über eine elektrische Leitung (15) mit dem Heizelement (14) verbunden sind, und in den Sammelbehälter (1) so einsetzbar oder eingesetzt ist, daß sich in der Betriebsstellung der Sammelraum im wesentlichen unterhalb des Vorratsbehälters (3) befindet, und daß die Stromzufuhr zum Heizelement (14) so ausgebildet ist, daß sie beim Öffnen des Ventils (10 - 13) unterbrochen wird.

2. Vorrichtung nach Anspruch 1, dadurch gekennzeichnet, daß in der Betriebsstellung unterhalb des Ventils (10 - 13) ein durch ein Sieb oder Filter (9) verschlossener Vorratsraum für ein Brüh- oder Aufgußmaterial (8) vorgesehen ist.

3. Vorrichtung nach Anspruch 2, dadurch gekennzeichnet, daß das Brüh- oder Aufgußmaterial (8) im unteren Bereich des Vorratsraums fixiert ist.

4. Vorrichtung nach Anspruch 2 oder 3, dadurch gekennzeichnet, daß das Brüh- oder Aufgußmaterial (8) in einem unter Wärmeeinwirkung zerstörbaren Folienbeutel angeordnet ist.

5. Vorrichtung nach einem der Ansprüche 1 bis 4, dadurch gekennzeichnet, daß der Sammelbehälter (1) den Vorratsbehälter (3) in der Betriebsstellung seitlich und unten vollständig umschließt.

6. Vorrichtung nach Anspruch 5, dadurch gekennzeichnet, daß der Sammelbehälter (1) mit einem seitlichen rohrförmigen Kanal (2) zum Entnehmen des Getränkes versehen ist.

7. Vorrichtung nach Anspruch 6, dadurch gekennzeichnet, daß der Vorratsbehälter (3) fest in den Sammelbehälter (1) eingesetzt ist und die Öffnung des Entnahmekanals (2) mit einer abziehbaren Folie (27) verschlossen ist.

8. Vorrichtung nach Anspruch 6 oder 7, dadurch gekennzeichnet, daß in der Öffnung des Entnahmekanals (2) oder in der Nähe desselben eine Dichtung (24) vorgesehen ist.

9. Vorrichtung nach einem der Ansprüche 1 bis 8, dadurch gekennzeichnet, daß die aus Vorrats- und Sammelbehälter (3, 1) bestehende Behältereinheit mit einem in der Betriebsstellung oben seitlich herausragenden Flansch (22) zum Einschieben in eine Stromversorgungseinheit (17) und zum Festhalten in derselben versehen ist.

10. Vorrichtung nach einem der Ansprüche 1 bis 9, dadurch gekennzeichnet, daß die Behältereinheit mit oberen Kontakten (16) versehen ist.

11. Vorrichtung nach einem der Ansprüche 1 bis 9, dadurch gekennzeichnet, daß die Behältereinheit mit seitlichen Kontakten (16) versehen ist.

12. Vorrichtung nach einem der Ansprüche 1 bis 11, dadurch gekennzeichnet, daß die Stromversorgungseinheit (17) klappbar, versenkbar oder in eine Ausnehmung einschiebbar ausgebildet und mit einer Lichtquelle (21) versehen ist.

13. Vorrichtung nach einem der Ansprüche 1 bis 12, dadurch gekennzeichnet, daß das Ventil (10 - 13) ein zylinderförmiges Element (10) aufweist, das von einer ringförmigen Dichtung (13) des Bodens (5) des Vorratsbehälters (3) umgriffen wird und in der Betriebsstellung unten einen Bereich (12) kleineren Durchmessers aufweist, wobei der Vorratsbehälter (3) so ausgebildet ist, daß sich sein Boden (5) bei anwachsendem Druck nach unten bewegt.

14. Vorrichtung nach Anspruch 13, dadurch gekennzeichnet, daß die Seitenwand des Vorratsbehälters (3) einen ringförmigen balgenartigen Bereich (28) aufweist.

15. Vorrichtung nach Anspruch 13, dadurch gekennzeichnet, daß der Boden (5) gewölbt, im Sinne einer konvexen Wölbung vorgespannt und beim Befüllen in eine konkave Wölbung verformt ist.

16. Vorrichtung nach einem der Ansprüche 1 bis 15, dadurch gekennzeichnet, daß die Stromverbindung zwischen Kontakten (16) und Heizelement (14) beim Öffnen des Ventils (10 - 13) unterbrochen wird.

17. Vorrichtung nach Anspruch 16, dadurch gekennzeichnet, daß die Stromzuleitung (15) von den Kontakten (16) zum Heizelement (14) nach außen vorgespannte Federelemente aufweist, die bei sich nach unten bewegendem Boden (5) in eine Stellung freigebbar sind, in der die Verbindung unterbrochen ist.

18. Vorrichtung nach einem der Ansprüche 1 bis 15, dadurch gekennzeichnet, daß die Kontakte (16) in balgenartigen (30) Ausnehmungen (31) oder Vorsprüngen des Behälters (1) angeordnet sind und sich bei Nachlassen eines anfänglichen Überdrucks nach innen bewegen.

19. Vorrichtung nach Anspruch 18, dadurch gekennzeichnet, daß die Ausnehmungen (31) für die Kontakte (16) am Deckel (4) angeordnet sind und mit federbelasteten Kontaktelementen (32) am Stromversorgungsteil (17) zusammenwirken, die mit einem mechanischen Anschlag (42) für die Begrenzung ihrer Bewegung in Richtung zum Behälterinnern versehen sind.

20. Vorrichtung nach Anspruch 19, dadurch gekennzeichnet, daß die Kontaktelemente (32) an einem Hebel (37) gelagert sind, der einen beweglichen Anschlag (41) für den Behälterrand aufweist.

21. Vorrichtung nach einem der Ansprüche 1 bis 20, dadurch gekennzeichnet, daß die Halterung (17) eine federnd nachgebende Rasteinrichtung für den Behälter (1) aufweist.

22. Vorrichtung nach einem der Ansprüche 1 bis 21, dadurch gekennzeichnet, daß zwischen Flüssigkeitsvorratsbehälter (3) und Sammelbehälter eine wenigstens zum Teil lösbare Verbindung (44) vorgesehen ist.

## Claims

1. An apparatus for preparing hot drinks with a liquid supply vessel, an electric heating element disposed therein, a power supply part and a collector vessel for the prepared drink, characterised in that the liquid supply vessel (3) is formed as a unit which is closed by a valve (10 - 13) which opens irreversibly at a predetermined internal vessel pressure, which unit is separate from the power supply part (17), which is constructed as a holder for the vessel part, which unit is provided with contacts (16) for the supply of electrical current which are connected to the heating element (14) via electrical leads (15), and which unit is or can be inserted in the collector vessel (1) so that in the operating position the collection space is essentially located below the supply vessel (3), and that the power supply to the heating element (14) is constructed so that it is interrupted when the valve (10 - 13) opens.

2. An apparatus according to Claim 1, characterised in that in the operating position a supply space, which is closed by means of a sieve or filter (9), is provided below the valve (10 - 13) for a material to be steeped or infused (8) .

3. An apparatus according to Claim 2, characterised in that the material to be steeped or infused (8) is fixed in the bottom region of the supply space.

4. An apparatus according to Claim 2 or 3, characterised in that the material to be steeped or infused (8) is disposed in a foil bag which can be destroyed by the action of heat.

5. An apparatus according to any one of Claims 1 to 4, characterised in that in the operating position the collector vessel (1) completely surrounds the supply vessel (3) at the sides and at the bottom.

6. An apparatus according to Claim 5, characterised in that the collector vessel (1) is provided with a tubular channel (2) at the side for withdrawing the drink.

7. An apparatus according to Claim 6, characterised in that the supply vessel (3) is inserted fixed in the collector vessel (1) and the opening of the withdrawal channel (2) is closed by means of a foil (27) which can be peeled off.

8. An apparatus according to Claim 6 or 7, characterised in that a seal (24) is provided in the opening of the withdrawal channel (2) or in the vicinity thereof.

9. An apparatus according to any one of Claims 1 to 8, characterised in that the vessel unit comprising the supply and collector vessels (3, 1) is provided with a flange (22) which projects laterally at the top in the operating position for its insertion in a power supply unit (17) and for securing it in the same.

10. An apparatus according to any one of Claims 1 to 9, characterised in that the vessel unit is provided with contacts (16) at the top.

11. An apparatus according to any one of Claims 1 to 9, characterised in that the vessel unit is provided with contacts (16) at the side.

12. An apparatus according to any one of Claims 1 to 11, characterised in that the power supply unit (17) is formed so that it can be folded or lowered, or inserted into a recess, and is provided with a light source (21).

13. An apparatus according to any one of Claims 1 to 12, characterised in that the valve (10 - 13) has a cylindrical element (10) which is encompassed by an annular seal (13) at the base (5) of the supply vessel (3) and which in the operating position has a region (12) of smaller diameter at the bottom, wherein the supply vessel (3) is constructed so that its base (5) moves downwards with increasing pressure.

14. An apparatus according to Claim 13, characterised in that the sidewall of the supply vessel (3) has an annular, bellows-like region (28).

15. An apparatus according to Claim 13, characterised in that the base (5) is curved, is prestressed in the sense of a convex curvature and is deformed into a concave curvature on filling.

16. An apparatus according to any one of Claims 1 to 15, characterised in that the current connection between the contacts (16) and the heating element (14) is broken when the valve (10 - 13) opens.

17. An apparatus according to Claim 16, characterised in that the power supply lead (15) from the contacts (16) to the heating element (14) has outwardly prestressed spring elements which can be released into a position in which the connection is broken when the base (5) moves downwards.

18. An apparatus according to any one of Claims 1 to 15, characterised in that the contacts (16) are disposed in bellows-like (30) recesses (31) or projections in the vessel (1) and move inwards when an initial overpressure is reduced.

19. An apparatus according to Claim 18, characterised in that the recesses (31) for the contacts (16) are disposed on the lid (4) and cooperate with spring-loaded contact elements (32) on the power supply part (17), which contact elements are provided with a mechanical stop (42) to restrict their movement in the direction towards the inside of the vessel.

20. An apparatus according to Claim 19, characterised in that the contact elements (32) are mounted on a lever (37) which has a movable stop (41) for the edge of the vessel.

21. An apparatus according to any one of Claims 1 to 20, characterised in that the holder (17) has a resiliently yielding holding device for the vessel (1).

22. An apparatus according to any one of Claims 1 to 21, characterised in that a connection (44), which is at least partially detachable, is provided between the liquid supply vessel (3) and the collector vessel.

## Revendications

1. Appareil pour la préparation de boissons chaudes, comportant un réservoir de liquide, un élément chauffant électrique disposé dans celui-ci, un bloc d'alimentation électrique et un récipient collecteur pour la boisson préparée, caractérisé en ce que le réservoir de liquide (3) est réalisé sous forme d'unité séparée du bloc d'alimentation (17) - réalisé sous forme de support pour la partie récipients - et fermée par une valve (10-13) qui s'ouvre de façon irréversible lorsqu'une pression prédéfinie est atteinte à l'intérieur du réservoir, en ce qu'il est muni de contacts (16) d'alimentation en courant électrique qui sont reliés à l'élément chauffant (14) par une ligne électrique (15), et en ce qu'il est insérable ou inséré dans le récipient collecteur (1), de sorte qu'en position de service, l'espace collecteur se trouve essentiellement au-dessous du réservoir (3), et en ce que l'alimentation en courant de l'élément chauffant (14) est réalisée de sorte qu'elle soit interrompue en cas d'ouverture de la valve (10-13).

2. Appareil selon la revendication 1, caractérisé en ce qu'en position de service, il est prévu, au-dessous de la valve (10-13), un espace de réserve, fermé par un tamis ou un filtre (9), pour une matière à ébouillanter ou à infuser (8).

3. Appareil selon la revendication 2, caractérisé en ce que la matière à ébouillanter ou à infuser (8) est disposée dans la partie inférieure de l'espace de réserve (8).

4. Appareil selon la revendication 2 ou 3, caractérisé en ce que la matière à ébouillanter ou à infuser (8) est placée dans un sachet de feuille mince destructible sous l'effet de la chaleur.

5. Appareil selon l'une quelconque des revendications 1 à 4, caractérisé en ce qu'en position de service, le récipient collecteur (1) entoure complètement le réservoir (3) latéralement et vers le bas.

6. Appareil selon la revendication 5, caractérisé en ce que le récipient collecteur (1) est muni d'un conduit tubulaire latéral (2) pour le prélèvement de la boisson.

7. Appareil selon la revendication 6, caractérisé en ce que le réservoir (3) est inséré et fermement calé dans le récipient collecteur (1) et en ce que l'ouverture du conduit de prélèvement (2) est fermée par une feuille mince arrachable (27).

8. Appareil selon la revendication 6 ou 7, caractérisé en ce qu'une garniture d'étanchéité (24) est prévue dans l'ouverture du conduit de prélèvement (2) ou à proximité de celle-ci.

9. Appareil selon l'une quelconque des revendications 1 à 8, caractérisé en ce que l'ensemble des récipients, composé du réservoir et du récipient collecteur (3, 1), est muni d'une plaque (22) qui, en position de service, fait saillie latéralement en haut et qui est destinée à être glissée dans un bloc d'alimentation (17) et à être maintenue dans celui-ci.

10. Appareil selon l'une quelconque des revendications 1 à 9, caractérisé en ce que l'ensemble des récipients est muni de contacts supérieurs (16).

11. Appareil selon l'une quelconque des revendications 1 à 9, caractérisé en ce que l'ensemble des récipients est muni de contacts latéraux (16).

12. Appareil selon l'une quelconque des revendications 1 à 11, caractérisé en ce que le bloc d'alimentation électrique (17) est réalisé de façon rabattable, escamotable ou insérable dans un creux, et en ce qu'il est muni d'une source lumineuse (21).

13. Appareil selon l'une quelconque des revendications 1 à 12, caractérisé en ce que la valve (10-13) comporte un élément cylindrique (10) qui est entouré par un joint d'étanchéité annulaire (13) du fond (5) du réservoir (3) et qui, en position de service, présente en bas une région (12) de plus petit diamètre, le réservoir (3) étant réalisé de sorte que son fond (5) se déplace vers le bas lorsque la pression augmente.

14. Appareil selon la revendication 13, caractérisé en ce que la paroi latérale du réservoir (3) présente une région annulaire (28) réalisée à la manière d'un soufflet.

15. Appareil selon la revendication 13, caractérisé en ce que le fond (5) est bombé, précontraint dans le sens d'un bombement convexe et déformé au remplissage dans le sens d'un bombement concave.

16. Appareil selon l'une quelconque des revendications 1 à 15, caractérisé en ce que la connexion électrique entre les contacts (16) et l'élément chauffant (14) est interrompue en cas d'ouverture de la valve (10-13).

17. Appareil selon la revendication 16, caractérisé en ce la ligne d'alimentation électrique (15) entre les contacts (16) et l'élément chauffant (14) présente des éléments à ressort précontraints vers l'extérieur qui peuvent être dégagés dans une position dans laquelle la connexion est interrompue lorsque le fond (5) se déplace vers le bas.

18. Appareil selon l'une quelconque des revendications 1 à 15, caractérisé en ce que les contacts (16) sont disposés dans des creux (31) ou des saillies du récipient (1) réalisés à la manière de soufflets (30) et en ce qu'ils se déplacent vers l'intérieur lors de la détente d'une surpession initiale.

19. Appareil selon la revendication 18, caractérisé en ce que les creux (31) pour les contacts (16) sont disposés dans le couvercle (4) et coopèrent avec des éléments de contact à ressort (32) qui sont prévus sur le bloc d'alimentation électrique (17) et qui sont munis d'une butée mécanique (42) pour limiter leur mouvement en direction de l'intérieur du récipient.

20. Appareil selon la revendication 19, caractérisé en ce que les éléments de contact (32) sont montés sur un levier (37) qui présente une butée mobile (41) pour le bord du récipient.

21. Appareil selon l'une quelconque des revendications 1 à 20, caractérisé en ce que le support (17) présente un dispositif d'encliquetage cédant élastiquement pour le récipient (1).

22. Appareil selon l'une quelconque des revendications 1 à 21, caractérisé en ce qu'il est prévu, entre le réservoir de liquide (3) et le récipient collecteur, une liaison (44) qui peut être détachée au moins partiellement.
